# EUROPEAN PATENT APPLICATION

(11) **EP 4 644 951 A1**
(43) Date of publication of application: **05.11.2025**
(21) Application number: 23910305.4
(22) Date of filing: 20.12.2023
(51) Int. Cl.: G01S 17/86, G01S 17/88, G01C 22/00, A47L 5/22, A47L 11/24

(54) **SLIP STATE DETECTION METHOD, DEVICE AND STORAGE MEDIUM**

(30) Priority: 30.12.2022 CN 202211729463
(71) Applicant: Beijing Roborock Innovation Technology Co., Ltd., Beijing 102206 (CN)
(72) Inventor: NIU, Yansheng, Beijing 102206 (CN)
(74) Representative: Potter Clarkson
(86) International application number: PCT/CN2023/140348
(87) International publication number: WO 2024/140376

(57) **Abstract**

A slip state detection method, a device, and a storage medium. The slip state detection method comprises: during a walking process of an automatic cleaning device, acquiring a measurement distance value and a plurality of frame point clouds within a preset detection time period (S101); and quickly and accurately determining that the automatic cleaning device is in a slip state by means of the measurement distance value and the plurality of frame point clouds (S102). The present disclosure improves system sensing efficiency and detection sensitivity, thus improving user experience.

## Description

### CROSS-REFERENCE TO RELATED APPLICATION

This disclosure claims priority of the Chinese Patent Application No. 202211729463. 2, filed in China on December 30, 2022, which is incorporated herein by reference in its entirety.

### TECHNICAL FIELD

The present disclosure relates to the technical field of automatic cleaning apparatus, and in particular to a slipping state detection method and apparatus and a storage medium.

### BACKGROUND

With the development of intelligent technology, the application of automatic cleaning apparatus is becoming more and more widespread, such as sweeping robots. The sweeping robots tend to enter a slipping state when encountering thresholds, fan bases, and similar obstacles in user environments, affecting user experience.

### SUMMARY

The purpose of the present disclosure is to provide a slipping state detection method and apparatus and a storage medium. The specific scheme is as follows.

According to a specific embodiment of the present disclosure, in one aspect, the present disclosure provides a method for detecting a slipping state, comprising:
obtaining a metered distance value through an odometer, and obtaining multiple frame point clouds through a laser radar within a preset detection time period during the walking of an automatic cleaning apparatus, wherein the metered distance value represents a rotation distance value of a driving wheel assembly; and
determining that the automatic cleaning apparatus is in the slipping state based on the metered distance value and the multiple frame point clouds.

Optionally, said determining that the automatic cleaning apparatus is in the slipping state based on the metered distance value and the multiple frame point clouds comprises:
when the metered distance value is greater than a preset metered distance threshold, determining whether the position of the automatic cleaning apparatus has changed based on the multiple frame point clouds;
when it is determined that the position of the automatic cleaning apparatus has not changed, determining that the automatic cleaning apparatus is in the slipping state.

Optionally, said determining that the automatic cleaning apparatus is in the slipping state based on the metered distance value and the multiple frame point clouds comprises the following steps:
determining whether the position of the automatic cleaning apparatus has changed based on the multiple frame point clouds;
when it is determined that the position of the automatic cleaning apparatus has not changed based on the multiple frame point clouds, determining whether the metered distance value is greater than a preset metered distance threshold;
when the metered distance value is greater than the preset metered distance threshold, determining that the automatic cleaning apparatus is in the slipping state.

Optionally, each frame point cloud includes multiple point data;
Accordingly, said determining whether the position of the automatic cleaning apparatus has changed based on the multiple frame point clouds comprises:
allocating the multiple frame point clouds to a first point cloud set or a second point cloud set respectively, wherein the first point cloud set includes multiple first frame point clouds, and the second point cloud set includes multiple second frame point clouds;
performing similarity matching based on the multiple first frame point clouds and the multiple second frame point clouds to obtain a similarity matching result; and
determining whether the position of the automatic cleaning apparatus has changed based on the similarity matching result.

Optionally, said allocating the multiple frame point clouds to a first point cloud set or a second point cloud set respectively comprises:
dividing the preset detection time period into a first detection time period and a second detection time period;
allocating the multiple frame point clouds within the first detection time period respectively to the first point cloud set, and allocating the multiple frame point clouds within the second detection time period respectively to the second point cloud set.

Optionally, that the processor is configured to allocate the multiple frame point clouds to the first point cloud set or the second point cloud set respectively, comprises:
dividing the preset detection time period into a first detection time period and a second detection time period;
allocating the multiple frame point clouds within the first detection time period respectively to the first point cloud set, and allocating the multiple frame point clouds within the second detection time period respectively to the second point cloud set.

Optionally, said performing similarity matching based on the multiple first frame point clouds and the multiple second frame point clouds to obtain a similarity matching result comprises:
projecting a two-dimensional position of each point data in each first frame point cloud onto a preset plane to obtain a first plane map, and projecting a two-dimensional position of each point data in each second frame point cloud onto the preset plane to obtain a second plane map, wherein the first plane map includes multiple first projection positions, and the second plane map includes multiple second projection positions; and
performing similarity matching based on the multiple first projection positions in the first plane map and the multiple second projection positions in the second plane map to obtain the similarity matching result.

Optionally, the preset plane includes a preset grid plane;
The first plane map includes a first grid plane map, the first grid plane map includes multiple first occupied grids among the multiple grids, and each first occupied grid includes at least one first projection position;
The second plane map includes a second grid plane map, the second grid plane map includes multiple second occupied grids among the multiple grids, and each second occupied grid includes at least one second projection position;
Accordingly, said performing similarity matching based on the multiple first projection positions in the first plane map and the multiple second projection positions in the second plane map to obtain the similarity matching result comprises:
performing grid similarity matching based on the at least one first projection position in each first occupied grid of the first grid plane map and the at least one second projection position in each second occupied grid of the second grid plane map to obtain the similarity matching result.

Optionally, said performing grid similarity matching based on the at least one first projection position in each first occupied grid of the first grid plane map and the at least one second projection position in each second occupied grid of the second grid plane map to obtain the similarity matching result comprises:
based on the at least one first projection position in each first occupied grid of the first grid plane map, obtaining a first position normalized value corresponding to the first occupied grid, and based on the at least one second projection position in each second grid of the second grid plane map, obtaining a second position normalized value corresponding to the second grid;
performing grid similarity matching based on the first position normalized value of each first occupied grid in the first grid plane map and the second position normalized value of each second occupied grid in the second grid plane map to obtain the similarity matching result.

Optionally, said performing grid similarity matching based on the first position normalized value of each first occupied grid in the first grid plane map and the second position normalized value of each second occupied grid in the second grid plane map to obtain the similarity matching result comprises:
when traversing any first occupied grid in the first grid plane map, a first calculation parameter value is increased by 1;
when the first position normalized value of said any first occupied grid and the second position normalized value of the grid in the second grid plane map corresponding to said any first occupied grid meet the same preset condition, a second calculation parameter value is increased by 1;
after the traversal is completed, the quotient of the second calculation parameter value and the first calculation parameter value is calculated to obtain a first similarity matching result.

Optionally, said performing grid similarity matching based on the first position normalized value of each first occupied grid in the first grid plane map and the second position normalized value of each second occupied grid in the second grid plane map to obtain the similarity matching result comprises:
when traversing any second occupied grid in the second grid plane map, a third calculation parameter value is increased by 1;
when the second position normalized value of said any second occupied grid and the first position normalized value of the grid in the first grid plane map corresponding to said any second occupied grid meet the same preset condition, a fourth calculation parameter value is increased by 1;
after the traversal is completed, the quotient of the fourth calculation parameter value and the third calculation parameter value is calculated to obtain a second similarity matching result.

Optionally, said based on the at least one first projection position in each first occupied grid of the first grid plane map obtaining a first position normalized value corresponding to the first occupied grid, and based on the at least one second projection position in each second grid of the second grid plane map obtaining a second position normalized value corresponding to the second grid comprises:
based on the at least one first projection position in each first occupied grid of the first grid plane map, determining the first position normalized value corresponding to the first occupied grid to be 1, wherein an initial position normalized value of each grid in the first grid plane map before similarity matching is zero, and
based on the at least one first projection position in each second grid of the second grid plane map, determining the second position normalized value corresponding to the second grid to be 1, wherein an initial position normalized value of each grid in the second grid plane map before similarity matching is zero.

Optionally, said determining whether the position of the automatic cleaning apparatus has changed based on the similarity matching result comprises:
when the first similarity matching result and/or the second similarity matching result is greater than or equal to a preset proportion threshold, determining that the position of the automatic cleaning apparatus has not changed.

Optionally, said determining whether the position of the automatic cleaning apparatus has changed based on the similarity matching result comprises:
when the first similarity matching result and/or the second similarity matching result is less than a preset proportion threshold, determining that the position of the automatic cleaning apparatus has changed.

According to a specific embodiment of the present disclosure, in a second aspect, the present disclosure provides an apparatus for detecting a slipping state, comprising:
an odometer configured to obtain a metered distance value, wherein the metered distance value represents a rotation distance value of a driving wheel assembly;
a laser radar configured to obtain a frame point cloud during the walking of an automatic cleaning apparatus; and
a processor connected respectively to the odometer and the laser radar for communication, and the processor configured to:
   obtain the metered distance value through the odometer, and obtain multiple frame point clouds through the laser radar within a preset detection time period during the walking of the automatic cleaning apparatus, wherein the metered distance value represents the rotation distance value of the driving wheel assembly;
   determine that the automatic cleaning apparatus is in the slipping state based on the metered distance value and the multiple frame point clouds.

Optionally, that the processor is configured to determine that the automatic cleaning apparatus is in the slipping state based on the metered distance value and the multiple frame point clouds, comprises:
when the metered distance value is greater than a preset metered distance threshold, determining whether the position of the automatic cleaning apparatus has changed based on the multiple frame point clouds; and
when it is determined that the position of the automatic cleaning apparatus has not changed, determining that the automatic cleaning apparatus is in the slipping state.

Optionally, that the processor is configured to determine that the automatic cleaning apparatus is in the slipping state based on the metered distance value and the multiple frame point clouds, comprises:
determining whether the position of the automatic cleaning apparatus has changed based on the multiple frame point clouds;
when it is determined that the position of the automatic cleaning apparatus has not changed based on the multiple frame point clouds, determining whether the metered distance value is greater than a preset metered distance threshold; and
when the metered distance value is greater than the preset metered distance threshold, determining that the automatic cleaning apparatus is in the slipping state.

Optionally, each frame point cloud includes multiple point data;
Accordingly, that the processor is configured to determine whether the position of the automatic cleaning apparatus has changed based on the multiple frame point clouds, comprises:
allocating the multiple frame point clouds to a first point cloud set or a second point cloud set respectively, wherein the first point cloud set includes multiple first frame point clouds, and the second point cloud set includes multiple second frame point clouds;
performing similarity matching based on the multiple first frame point clouds and the multiple second frame point clouds to obtain a similarity matching result; and
determining whether the position of the automatic cleaning apparatus has changed based on the similarity matching result.

Optionally, that the processor is configured to perform similarity matching based on the multiple first frame point clouds and the multiple second frame point clouds to obtain a similarity matching result, comprises:
projecting a two-dimensional position of each point data in each first frame point cloud onto a preset plane to obtain a first plane map, and projecting a two-dimensional position of each point data in each second frame point cloud onto the preset plane to obtain a second plane map, wherein the first plane map includes multiple first projection positions, and the second plane map includes multiple second projection positions; and
performing similarity matching based on the multiple first projection positions in the first plane map and the multiple second projection positions in the second plane map to obtain the similarity matching result.

Optionally, the preset plane includes a preset grid plane;
The first plane map includes a first grid plane map, the first grid plane map includes multiple first occupied grids among the multiple grids, and each first occupied grid includes at least one first projection position;
The second plane map includes a second grid plane map, the second grid plane map includes multiple second occupied grids among the multiple grids, and each second occupied grid includes at least one second projection position;
Accordingly, that the processor is configured to perform similarity matching based on the multiple first projection positions in the first plane map and the multiple second projection positions in the second plane map to obtain the similarity matching results, comprises:
performing grid similarity matching based on the at least one first projection position in each first occupied grid of the first grid plane map and the at least one second projection position in each second occupied grid of the second grid plane map to obtain the similarity matching result.

Optionally, that the processor is configured to perform grid similarity matching based on the at least one first projection position in each first occupied grid of the first grid plane map and the at least one second projection position in each second occupied grid of the second grid plane map to obtain the similarity matching result, comprises:
based on the at least one first projection position in each first occupied grid of the first grid plane map, obtaining a first position normalized value corresponding to the first occupied grid, and based on the at least one second projection position in each second grid of the second grid plane map, obtaining a second position normalized value corresponding to the second grid;
performing grid similarity matching based on the first position normalized value of each first occupied grid in the first grid plane map and the second position normalized value of each second occupied grid in the second grid plane map to obtain the similarity matching result.

Optionally, that the processor is configured to perform grid similarity matching based on the first position normalized value of each first occupied grid in the first grid plane map and the second position normalized value of each second occupied grid in the second grid plane map to obtain the similarity matching result, comprises:
when traversing any first occupied grid in the first grid plane map, a first calculation parameter value is increased by 1;
when the first position normalized value of said any first occupied grid and the second position normalized value of the grid in the second grid plane map corresponding to said any first occupied grid meet the same preset condition, a second calculation parameter value is increased by 1;
after the traversal is completed, the quotient of the second calculation parameter value and the first calculation parameter value is calculated to obtain a first similarity matching result.

Optionally, that the processor is configured to perform grid similarity matching based on the first position normalized value of each first occupied grid in the first grid plane map and the second position normalized value of each second occupied grid in the second grid plane map to obtain the similarity matching result, comprises:
when traversing any second occupied grid in the second grid plane map, a third calculation parameter value is increased by 1;
when the second position normalized value of said any second occupied grid and the first position normalized value of the grid in the first grid plane map corresponding to said any second occupied grid meet the same preset condition, a fourth calculation parameter value is increased by 1;
after the traversal is completed, the quotient of the fourth calculation parameter value and the third calculation parameter value is calculated to obtain a second similarity matching result.

Optionally, that the processor is configured to, based on the at least one first projection position in each first occupied grid of the first grid plane map, obtain the first position normalized value corresponding to the first occupied grid, and based on the at least one second projection position in each second grid of the second grid plane map, obtain the second position normalized value corresponding to the second grid, comprises:
based on the at least one first projection position in each first occupied grid of the first grid plane map, determining the first position normalized value corresponding to the first occupied grid to be 1, wherein an initial position normalized value of each grid in the first grid plane map before similarity matching is zero; and
based on the at least one first projection position in each second grid of the second grid plane map, determining a second position normalized value corresponding to the second grid to be 1, wherein an initial position normalized value of each grid in the second grid plane map before similarity matching is zero.

Optionally, that the processor is configured to determine whether the position of the automatic cleaning apparatus has changed based on the similarity matching result, comprises:
when the first similarity matching result and/or the second similarity matching result is greater than or equal to a preset proportion threshold, determining that the position of the automatic cleaning apparatus has not changed.

Optionally, that the processor is further configured to determine whether the position of the automatic cleaning apparatus has changed based on the similarity matching result, comprises:
when the first similarity matching result and/or the second similarity matching result is less than a preset proportion threshold, determining that the position of the automatic cleaning apparatus has changed.

An embodiment of the present disclosure provides an automatic cleaning apparatus, comprising a processor and a memory, wherein the memory stores computer program instructions that may be executed by the processor, and when the processor executes the computer program instructions, steps of any method described above are implemented.

An embodiment of the present disclosure provides a non-transitory computer-readable storage medium storing computer program instructions, wherein the computer program instructions implement steps of any method described above when called and executed by a processor.

The above aspects of the embodiment of the present disclosure have at least the following beneficial effects.

The present disclosure provides a slipping state detection method and apparatus and a storage medium. The present disclosure obtains a metered distance value and multiple frame point clouds within a preset detection time period during the walking of the automatic cleaning apparatus, and can quickly and accurately determine that the automatic cleaning apparatus is in a slipping state through the metered distance value and multiple frame point clouds. Thus, the perception efficiency and detection sensitivity of the system are improved, and the user experience is improved.

### BRIEF DESCRIPTION OF THE DRAWINGS

FIG. 1 is a schematic diagram showing the overall structure of an automatic cleaning apparatus according to some embodiments of the present disclosure;
FIG. 2 is a schematic diagram showing a bottom-up structural view of an automatic cleaning apparatus according to some embodiments of the present disclosure;
FIG. 3 shows a flow chart of a method for detecting a slipping state according to an embodiment of the present disclosure;
FIG. 4 shows a schematic diagram of a grid plane map according to an embodiment of the present disclosure;
FIG. 5 shows a block diagram of units of an automatic cleaning apparatus according to some embodiments; and
FIG. 6 is a schematic structural diagram of an automatic cleaning apparatus according to some embodiments.

### DETAILED DESCRIPTION

To make the objectives, technical solutions and advantages of the present disclosure clearer, the present disclosure will be further described in detail below with reference to the accompanying drawings. It is obvious that the described embodiments are only some, but not all of the embodiments of the present disclosure. All other embodiments acquired by those of ordinary skills in the art without creative efforts based on the embodiments in the present disclosure are within the protection scope of the present disclosure.

The terms used in the embodiments of the present disclosure are for the purpose of describing particular embodiments only and are not intended to limit the present disclosure. The singular forms "a/an", "said" and "the" used in the embodiments of the present disclosure and the appended claims are intended to include the plural forms as well, unless otherwise indicated clearly in the context. The term "multiple" generally includes at least two.

It should be understood that, the term "and/or" used herein only describes an association relationship between associated objects, and indicates that there may be three kinds of relationships. For example, A and/or B may indicate three cases: A exists alone, A and B exist Meanwhile, and B exists alone. In addition, the character "/" herein generally indicates an "or" relationship between the contextual objects.

It should be understood that, although the terms first, second, third, etc. may be used to describe in the embodiments of the present disclosure, these should not be limited to these terms. These terms are only used to distinguish. For example, "first" may also be referred to as "second" without departing from the scope of the embodiments of the present disclosure. Similarly, "second" may also be referred to as "first".

As used herein, the words "if" and " provided that" may be interpreted as "at the time of" or " when" or "in response to determining" or "in response to detecting", depending on the context. Similarly, the phrases "if it is determined that" or "if it is detected that (a stated condition or event)" may be interpreted as "when it is determined that" or "in response to determining that" or "when detecting (a stated condition or event)" or "in response to detecting (a stated condition or event)", depending on the context.

It should also be noted that, the terms "including", "containing", or any other variants thereof are intended to cover the nonexclusive inclusion, such that a commodity or device including a series of elements includes not only those elements, but also other elements not listed explicitly or elements inherent to such a commodity or device. Without more limitations, the element defined by the phrase "including a..." does not exclude the existence of other same elements in the commodity or device including the element.

It should be particularly noted that any symbols and/or numbers in the specification that are not marked in the accompanying drawings are not drawing marks.

Optional embodiments of the present disclosure will be described in detail in combination with the accompanying drawings.

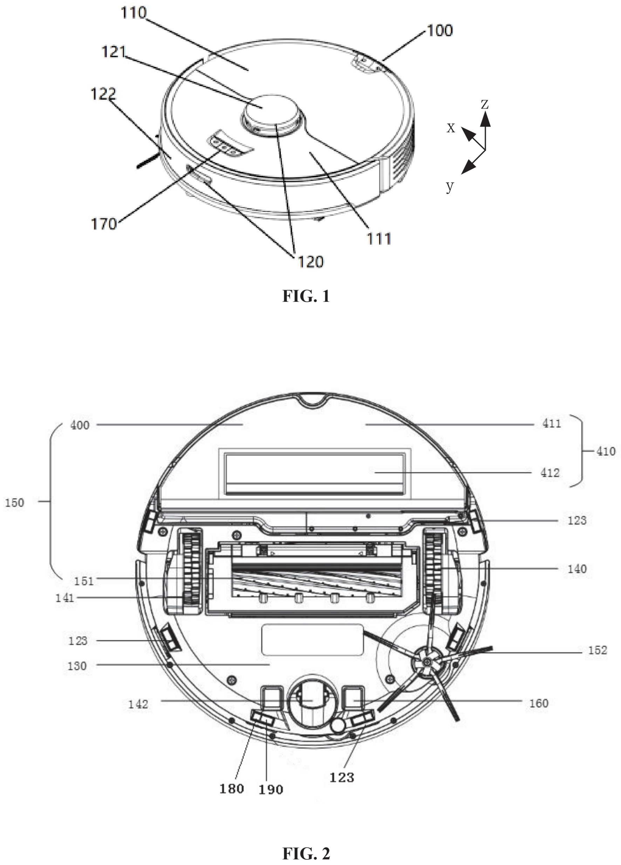

As shown in FIGs. 1-2, the automatic cleaning apparatus may be a vacuum cleaning robot, or may be a ground sweeping/ mopping/brushing/sweeping and mopping robot, etc. The automatic cleaning apparatus may include a mobile platform 100, a perception system 120, a processor 130, a driving system 140, a cleaning module, an energy system 160 and a human-computer interaction system 170.

The mobile platform 100 may be configured to move automatically along a target direction on an operating surface. The operating surface may be a surface to be cleaned by the automatic cleaning apparatus. In some embodiments, the automatic cleaning apparatus may be a self-moving robot such as a ground mopping robot, a ground sweeping robot, a ground sweeping and mopping robot, etc., and thus the automatic cleaning apparatus operates on a ground, and the ground is any operating surface, such as a desktop, a roof, a platform, etc. The automatic cleaning apparatus may also be a window cleaning robot, and thus the automatic cleaning apparatus operates on an outer surface of glass of a building, and the glass is the operating surface. The automatic cleaning apparatus may also be a pipe self-moving robot, and thus the automatic cleaning apparatus operates on an inner surface of a pipe, and the inner surface of the pipe is the operating surface. For the purpose of presentation only, the following description in the present application takes a ground mopping robot as an example for illustration.

In some embodiments, the mobile platform 100 may be an autonomous mobile platform 100, or a non-autonomous mobile platform 100. The autonomous mobile platform 100 refers to that the mobile platform 100 itself can automatically and adaptively make an operational decision based on an unexpected environmental input; and the non-autonomous mobile platform 100 itself cannot adaptively make an operational decision based on an unexpected environmental input, but can execute a given procedure or operate according to a certain logic. Accordingly, when the mobile platform 100 is the autonomous mobile platform 100, the target direction may be determined autonomously by the automatic cleaning apparatus; and when the mobile platform 100 is the non-autonomous mobile platform 100, the target direction may be set systematically or manually. When the mobile platform 100 is the autonomous mobile platform 100, the mobile platform 100 includes a forward portion 111 and a rearward portion 110.

The perception system 120 includes a posture determination device 121 located on the mobile platform 100, a buffer 122 located in the forward portion 111 of the mobile platform 100, a cliff sensor 123, a light detection assembly 180, a color detection assembly 190 and sensing devices such as a magnetometer, an accelerometer, a gyroscope, and an odometer 131 and the like located at a bottom of the mobile platform 100, for providing various position information and motion state information of the automatic cleaning apparatus to the processor 130.

In order to describe behaviors of the automatic cleaning apparatus more clearly, directions are defined as follows: the automatic cleaning apparatus may travel on the ground by various combinations of movements relative to the following three mutually perpendicular axes defined by the mobile platform 100, i.e., a transversal axis x, a front and rear axis y and a center vertical axis z. A forward driving direction along the front and rear axis y is designated as "forward", and a rearward driving direction along the front and rear axis y is designated as "rearward". The transversal axis x extends substantially between a right wheel and a left wheel of the automatic cleaning apparatus along an axis center defined by a center point of a driving wheel assembly 141 in a drive system 140. The automatic cleaning apparatus may rotate around the x axis. It is referred to as "pitch up" when the forward portion 111 of the automatic cleaning apparatus is tilted upward and the rearward portion 110 thereof is tilted downward, and it is referred to as "pitch down" when the forward portion 111 of the automatic cleaning apparatus is tilted downward and the rearward portion 110 thereof is tilted upward. In addition, the automatic cleaning apparatus may rotate around the z axis. In a forward direction of the automatic cleaning apparatus, it is referred to as "turn right" when the automatic cleaning apparatus is tilted to the right of the y axis, and it is referred to as "turn left" when the automatic cleaning apparatus is tilted to the left of the y axis.

As shown in FIG. 2, the cliff sensors 123 are provided at the bottom of the mobile platform 100 and in front and rear of the driving wheel assembly 141, respectively, for preventing the automatic cleaning apparatus from falling off when the automatic cleaning apparatus travels forward or retreats, so as to avoid a damage to the automatic cleaning apparatus. The aforementioned "front" refers to the same side with respect to a travelling direction of the automatic cleaning apparatus, and the aforementioned "rear" refers to a side opposite to the travelling direction of the automatic cleaning apparatus.

The posture determination device 121 includes, but is not limited to, devices such as a camera, a laser radar 132 (LDS), a line structured light device, an ODO sensor, etc. that can determine the position or posture of the automatic cleaning apparatus. The posture determination device 121 is not limited to being located on the top of the automatic cleaning apparatus. For example, the camera and the line structured light device may be provided at any position on the front or side of the automatic cleaning apparatus as needed, and the ODO sensor may be provided inside the automatic cleaning apparatus.

Various components in the perception system 120 may operate independently, or operate together to achieve a purpose function more accurately. The surface to be cleaned is identified by the signal received by the light detection assembly 180 and the color detection assembly 190 to determine physical properties of the surface to be cleaned, including a surface medium type, color grade, and the like, thereby determining the working mode of the automatic cleaning apparatus.

The forward portion 111 of the mobile platform 100 is provided with the buffer 122. During cleaning, when the driving wheel assembly 141 propels the automatic cleaning apparatus to travel on the ground, the buffer 122 detects one or more events (or objects) in a travelling path of the automatic cleaning apparatus via a sensor system, e.g., the light detection assembly 180 and the color detection assembly 190, and based on an event (or object), such as obstacle and wall, detected by the buffer 122, the automatic cleaning apparatus may control the driving wheel assembly 141 to cause the automatic cleaning apparatus to respond to the event (or object), for example, to move away from the obstacle.

The processor 130 is disposed on a main circuit board within the mobile platform 100, and includes a computing processor such as a central processing unit and an application processor, that communicates with a non-transitory memory such as a hard disk, a flash memory and a random-access memory. The application processor is configured to receive environmental information sensed by the plurality of sensors and transmitted from the perception system 120, to draw a simultaneous map of an environment where the automatic cleaning apparatus is located using a positioning algorithm e.g., Simultaneous Localization and Mapping (SLAM), based on obstacle information fed back by the laser radar 132, and to autonomously determine a travelling path based on the environmental information and the environmental map, and then to control the driving system 140 to perform operations, such as travelling forward, travelling backward, and/or steering based on the autonomously determined travelling path. Further, the processor 130 may also determine whether to activate the cleaning module to perform a cleaning operation based on the environmental information and the environmental map.

Specifically, the processor 130 may, based on distance information and speed information which are fed back by the buffer 122, the cliff sensors 123, the light detection assembly 180, the color detection assembly 190, and the sensing devices such as the magnetometer, the accelerometer, the gyroscope, the odometer 131 and the like, comprehensively determine a current operation state of the ground sweeping robot, such as crossing a threshold, getting on a carpet, locating at an edge of a cliff, being stuck from above or below, having a full dust box or being picked up, and will also give specific next-step action strategies for different situations, so that the operation of the automatic cleaning apparatus is more in line with requirements of an owner and provides better user experience. Further, the processor 130 can plan the most efficient and reasonable cleaning path and cleaning mode based on the simultaneous map information drawn by the SLAM, thereby greatly improving the cleaning efficiency of the automatic cleaning apparatus.

The driving system 140 may execute a driving command based on specific distance and angle information, such as x, y, and theta components, to manipulate the automatic cleaning apparatus to travel across the ground. The driving system 140 includes the driving wheel assembly 141, and may control a left wheel and a right wheel simultaneously. In order for the automatic cleaning apparatus to move on the ground more stably or have a higher movement ability, the automatic cleaning apparatus may include one or more steering assemblies 142, wherein the steering assembly 142 may be a driven wheel or a driving wheel, and structurally includes but is not limited to a universal wheel. The steering assembly 142 may be located in front of the driving wheel assembly 141.

The energy system 160 includes a rechargeable battery, such as a nickel-hydride battery and a lithium battery. The rechargeable battery may be connected to a charging control circuit, a battery pack charging temperature detecting circuit and a battery undervoltage monitoring circuit, wherein the charging control circuit, the battery pack charging temperature detecting circuit and the battery undervoltage monitoring circuit are then connected to a single-chip control circuit. The automatic cleaning apparatus is connected to a charging pile through a charging electrode disposed on a side of or below the body of the automatic cleaning apparatus for charging.

The human-computer interaction system 170 includes keys provided on a panel of the the automatic cleaning apparatus, and used by a user to select functions. The human-computer interaction system 170 may further include a display screen and/or an indicator light and/or a horn that present a current state or function item of the automatic cleaning apparatus to the user. The human-computer interaction system 170 may further include a mobile client program. For a route navigation type automatic cleaning apparatus, a mobile client may present a map of the environment where the automatic cleaning apparatus is located and a position of the automatic cleaning apparatus to the user, which may provide richer and more user-friendly function items to the user. The user can configure the cleaning parameters of the automatic cleaning apparatus through the mobile client.

The cleaning module may include a dry cleaning module 151 and/or a wet cleaning module 400. As shown in FIG. 2, the dry cleaning module 151 includes a rolling brush, a dust box, a fan and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the fan and passes through the dust box. A dust removal capacity of the automatic cleaning apparatus may be characterized by a DPU ( dust pickup efficiency) for the garbage. The DPU is affected by a structure and material of the rolling brush, by a wind utilization rate of an air duct formed by the dust suction inlet, the dust box, the fan, the air outlet and connecting components between the four, and by a type and power of the fan, which is a complex systematic design problem. Compared to an ordinary plug-in vacuum cleaner, the improvement of the dust removal capacity is more meaningful for an automatic cleaning apparatus with limited energy because the improvement of the dust removal capacity directly and effectively reduces requirements for energy, that is, for the cleaning apparatus that may clean 80 square meters of the ground on a single charge, it can evolve to clean 180 square meters or more on a single charge. Furthermore, the service life of the battery with the reduced number of charging times will also be greatly increased, so that the frequency of replacing the battery by the user will also be decreased correspondingly. More intuitively and importantly, the improvement of the dust removal capacity is the most obvious and important user experience, as the user will directly draw a conclusion on whether the sweeping/wiping is clean. The dry cleaning module 151 may further include a side brush 152 having a rotary shaft angled relative to the ground for moving debris into a region of the rolling brush of the dry cleaning module 151.

The wet cleaning module 400 provided in this embodiment is configured to clean at least a part of the operating surface in a wet cleaning manner. The wet cleaning module 400 includes a cleaning head 410 and a driving unit, wherein the cleaning head 410 is used to clean at least a portion of the operating surface, and the driving unit is used to drive the cleaning head 410 to reciprocate along the surface to be cleaned that is a portion of the operating surface. The cleaning head 410 reciprocates along the surface to be cleaned, and the cleaning head 410 is provided with a cleaning cloth or a cleaning plate on the contact surface with the surface to be cleaned. The cleaning head 410 generates high-frequency friction with the surface to be cleaned through reciprocating motion, thereby removing stains on the surface to be cleaned. The cleaning head 410 includes an active area 412 and a fixed area 411, and the active area 412 is provided at a substantially central position of the cleaning head 410.

Currently, the SLAM algorithm is mainly used to determine the slipping state of the sweeping robot, and then the sweeping robot is controlled to release such stuck state by actions such as turning in place, moving backward, etc.

However, the SLAM algorithm has high requirements for the accuracy of positioning coordinates. It obtains the positioning by matching with electronic maps and determines whether the sweeping robot is in the slipping state through the positioning change. Since matching with electronic maps is time-consuming, the processing time is long, requiring more than 10 seconds, and in extreme cases more than 20 seconds, which exceeds the time accepted by users.

To this end, the present disclosure provides an embodiment, namely, an embodiment of a method for detecting a slipping state.

The present disclosure will be described in detail below with reference to the accompanying drawings.

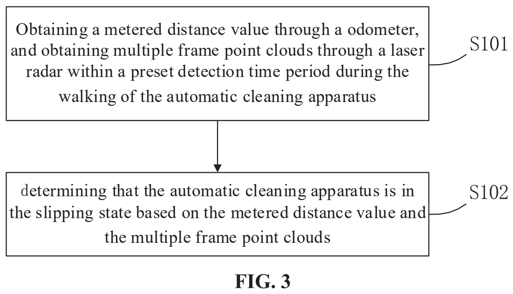

As shown in FIGs.3-4, the present disclosure provides a method for detecting a slipping state, comprising the following method steps.

Step S101, obtaining the metered distance value through the odometer 131, and obtaining multiple frame point clouds through the laser radar 132 within a preset detection time period during the walking of the automatic cleaning apparatus.

Here, the metered distance value represents the rotation distance value of the driving wheel assembly.

In the case of no obstacles, the metered distance value of the odometer 131 is equal to the travel distance of the automatic cleaning apparatus. However, when the automatic cleaning apparatus is slipping, although the metered distance value of the odometer 131 is changing, the travel distance of the automatic cleaning apparatus does not change.

The laser radar 132 is configured to use laser to detect and measure the distance outside the automatic cleaning apparatus.

Point cloud ( full name in English being point cloud data) , refers to a collection of massive point data that characterizes the surface characteristics of a target in a two-dimensional coordinate system. Each point data includes a set of vectors.

When the laser radar 132 irradiates the surface of an object, the reflected laser will carry information such as direction and distance. If the laser beam is scanned along a certain trajectory, the reflected laser point information (i.e., point data) will be recorded while scanning. Since the scanning is extremely precise, a large number of laser points may be obtained, thus forming a point cloud. Each point data includes the two-dimensional position of the laser reflection point.

The frame point cloud is a point cloud obtained after the laser radar 132 scans the surrounding environment for one cycle. The frame point cloud includes multiple point data.

Obtaining the metered distance value and multiple frame point clouds within the preset detection time period in the present disclosure aims to analyze a certain amount of data so as to clearly identify the difference between the previous and next data, improving the accuracy of the detection.

Step S102, determining that the automatic cleaning apparatus is in the slipping state based on the metered distance value and the multiple frame point clouds.

The embodiment of the present disclosure obtains the metered distance value and multiple frame point clouds within a preset detection time period during the walking of the automatic cleaning apparatus, and can quickly and accurately determine that the automatic cleaning apparatus is in a slipping state through the metered distance value and multiple frame point clouds. Thus, the perception efficiency and detection sensitivity of the system are improved, and the user experience is improved.

In some specific embodiments, said determining that the automatic cleaning apparatus is in the slipping state based on the metered distance value and the multiple frame point clouds comprises the following steps:

Step S102a-1, when the metered distance value of the automatic cleaning apparatus is greater than a preset metered distance threshold, determining whether the position of the automatic cleaning apparatus has changed based on the multiple frame point clouds.

If the metered distance value is too small, it means that the driving wheel assembly is not working, that is, the automatic cleaning apparatus is in an active stop state, or is in the process of entering the active stop state. This situation is not the slipping state. Therefore, the present disclosure identifies the state of the automatic cleaning apparatus that generates the metered distance value through the preset metered distance threshold, and excludes the above situation from detecting the slipping state. Only when the metered distance value of the automatic cleaning apparatus is greater than the preset metered distance threshold, it is detected whether the position of the automatic cleaning apparatus has changed. The number of times the slipping state is detected is reduced, and the perception efficiency of the system is improved.

In some specific embodiments, each frame point cloud includes multiple point data.

Accordingly, said determining whether the position of the automatic cleaning apparatus has changed based on the multiple frame point clouds comprises the following steps:
Step S102a-1-1, allocating the multiple frame point clouds to a first point cloud set or a second point cloud set respectively.

The multiple frame point clouds include multiple first frame point clouds 31 and multiple second frame point clouds 32.

The first point cloud set includes multiple first frame point clouds 31, and the second point cloud set includes multiple second frame point clouds 32.

During allocation, the multiple frame point clouds obtained within the preset detection time period may be allocated in a disordered manner, which does not affect the detection of whether the automatic cleaning apparatus is in the slipping state. The present disclosure does not limit the number of the multiple first frame point clouds 31 and the number of the multiple second frame point clouds 32. The total number of the multiple first frame point clouds 31 and the multiple second frame point clouds 32 may be equal to the number of the multiple second frame point clouds 32, or may be less than the number of the multiple second frame point clouds 32.

In some specific embodiments, said allocating the multiple frame point clouds to a first point cloud set or a second point cloud set respectively comprises the following steps:
Step S102a-1-1-1, dividing the preset detection time period into a first detection time period and a second detection time period.
Step S102a-1-1-2, allocating the multiple frame point clouds within the first detection time period respectively to the first point cloud set, and allocating the multiple frame point clouds within the second detection time period respectively to the second point cloud set.

In this specific embodiment, the preset detection time period is divided into the first detection time period and the second detection time period with a time sequence. Then, the multiple frame point clouds obtained in the preset detection time period are respectively allocated to the first point cloud set or the second point cloud set according to the time of acquisition. The first point cloud set collects the frame point clouds obtained in the first detection time period (i.e., multiple first frame point clouds 31); the second point cloud set collects the frame point clouds obtained in the second detection time period (i.e., multiple second frame point clouds 32).

This specific implementation can clearly reflect the position difference of the automatic cleaning apparatus in different time periods through the frame point clouds obtained in the previous and next time periods, so as to detect whether the automatic cleaning apparatus has moved based on the previous and next position difference. For example, based on the first detection time period and the second detection time period occurring in time sequence, only the first frame point cloud obtained in the first detection time period is allocated to the first point cloud set, and only the last frame point cloud obtained in the second detection time period is allocated to the second point cloud set; during the normal walking process of the automatic cleaning apparatus, the first frame point cloud and the last frame point cloud can clearly reflect the maximum position difference of the automatic cleaning apparatus, that is, the maximum displacement matching the metered distance value may be obtained through the first frame point cloud and the last frame point cloud in the preset detection time period; if the maximum displacement matching the metered distance value cannot be obtained, the automatic cleaning apparatus is in abnormal walking in the preset detection time period.

Step S102a-1-2, performing similarity matching based on the multiple first frame point clouds and the multiple second frame point clouds to obtain a similarity matching result.

In some specific embodiments, said performing similarity matching based on the multiple first frame point clouds and the multiple second frame point clouds to obtain a similarity matching result comprises the following steps:
Step S102a-1-2-1, projecting a two-dimensional position of each point data in each first frame point cloud onto a preset plane to obtain a first plane map, and projecting a two-dimensional position of each point data in each second frame point cloud onto the preset plane to obtain a second plane map.

Here, the first plane map includes multiple first projection positions, and the second plane map includes multiple second projection positions.

Step S102a-1-2-2, performing similarity matching based on the multiple first projection positions in the first plane map and the multiple second projection positions in the second plane map to obtain the similarity matching result.

This specific embodiment converts the two-dimensional position of each point data in each first frame point cloud to the two-dimensional position in the preset plane to generate the first plane map, and converts the two-dimensional position of each point data in each second frame point cloud to the two-dimensional position in the same preset plane to generate the second plane map. Matching the first plane map with the second plane map on the same preset plane simplifies the calculation amount, reduces the complexity of matching, and improves the efficiency of matching.

In some specific embodiments, the preset plane includes a preset grid plane.

The first plane map includes a first grid plane map 33; the first grid plane map 33 includes multiple first occupied grids 331 among the multiple grids, and each first occupied grid 331 includes at least one first projection position.

The second plane map includes a second grid plane map 34; the second grid plane map 34 includes multiple second occupied grids 341 among the multiple grids, and each second occupied grid 341 includes at least one second projection position.

The two-dimensional position of each point data in each first frame point cloud 31 is projected onto the preset grid plane to obtain the first grid plane map 33, and the two-dimensional position of each point data in each second frame point cloud 32 is projected onto the preset grid plane to obtain the second grid plane map 34.

Multiple grids arranged in an array are divided on the preset grid plane. The two-dimensional position of each point data in each first frame point cloud 31 of the first point cloud set is projected onto the preset grid plane to obtain the first grid plane map 33. The two-dimensional position of each point data in each second frame point cloud 32 of the second point cloud set is projected onto the preset grid plane to obtain the second grid plane map 34.

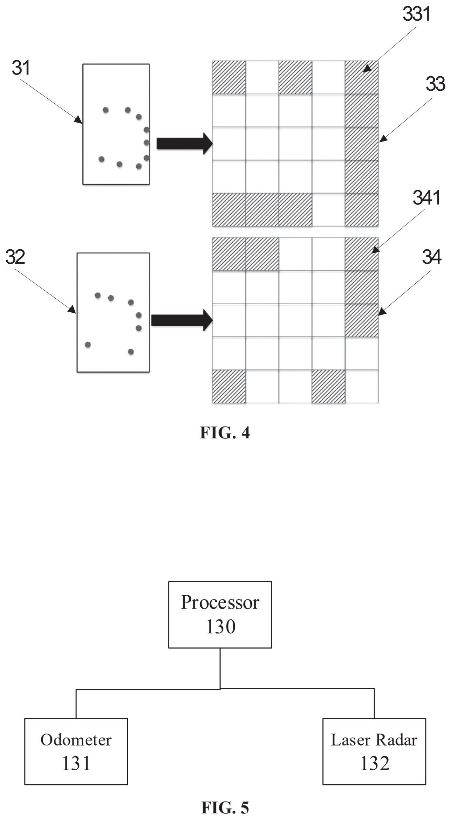

As shown in FIG.4, the first grid plane map 33 includes multiple grids arranged in an array; the second grid plane map 34 also includes multiple grids arranged in an array.

Here, multiple first occupied grids 331 are included in the multiple grids of the first grid plane map 33, and each first occupied grid 331 includes at least one first projection position. Multiple second occupied grids 341 are included in the multiple grids of the second grid plane map 34, and each second occupied grid 341 includes at least one second projection position.

It may be understood that when any grid of the first grid plane map 33 includes at least one first projection position, said any grid is called the first occupied grid 331; when any grid of the first grid plane map 33 does not include any first projection position, said any grid is called a first unoccupied grid. When any grid of the second grid plane map 34 includes at least one second projection position, said any grid is called the second occupied grid 341; when any grid of the second grid plane map 34 does not include any second projection position, said any grid is called a second unoccupied grid.

Each first projection position has a one-to-one correspondence with the two-dimensional position of a point data in the multiple first frame point clouds 31; and each second projection position has a one-to-one correspondence with the two-dimensional position of a point data in the multiple second frame point clouds 32.

This specific embodiment converts the two-dimensional position of the point data in the frame point cloud into a two-dimensional position in the preset grid plane, which simplifies the amount of calculation, reduces the complexity of matching, and improves the efficiency of matching.

Accordingly, said performing similarity matching based on the multiple first projection positions in the first plane map and the multiple second projection positions in the second plane map to obtain the similarity matching result comprises the following steps:
Step S102a-1-2-2a, performing grid similarity matching based on the at least one first projection position in each first occupied grid 331 of the first grid plane map 33 and the at least one second projection position in each second occupied grid 341 of the second grid plane map 34 to obtain the similarity matching result.

Since the first grid plane map 33 and the second grid plane map 34 are both generated on the preset grid plane, each grid in the first grid plane map 33 has a corresponding grid in the second grid plane map 34. In this specific embodiment, the grid is used as a unit for similarity matching, and the grids in the first grid plane map 33 and the second grid plane map 34 are compared one by one to finally obtain the similarity matching result. The similarity between the first grid plane map 33 and the second grid plane map 34 is measured by the similarity matching result.

In some specific embodiments, said performing grid similarity matching based on the at least one first projection position in each first occupied grid 331 of the first grid plane map 33 and the at least one second projection position in each second occupied grid 341 of the second grid plane map 34 to obtain the similarity matching result comprises the following steps:

Step S102a-1-2-2a1, based on the at least one first projection position in each first occupied grid 331 of the first grid plane map 33, obtaining a first position normalized value corresponding to the first occupied grid 331, and based on the at least one second projection position in each second grid of the second grid plane map 34, obtaining a second position normalized value corresponding to the second grid.

The position normalization value is a unique value that characterizes the position characteristics of all projection positions in the occupied grid. For example, the position normalization value includes an average distribution position of all projection positions in the occupied grid. When there are 3 projection positions (x1, y1), (x2, y2) and (x3, y3) in one occupied grid, the average distribution position of the occupied grid is ( xn, yn ), where xn = (x1+ x2+ x3)/3, yn = (y1+ y2+ y3)/3. Using the average distribution position as the position normalization value can improve the accuracy of grid similarity matching and improve the accuracy of detection.

The first position normalized value and the second position normalized value both belong to position normalized values.

In some other specific embodiments, the step of based on the at least one first projection position in each first occupied grid 331 of the first grid plane map 33, obtaining a first position normalized value corresponding to the first occupied grid 331, and based on the at least one second projection position in each second grid of the second grid plane map 34, obtaining a second position normalized value corresponding to the second grid, comprises the following steps:
Step S102a-1-2-2a-1a, based on the at least one first projection position in each first occupied grid 331 of the first grid plane map 33, determining a first position normalized value corresponding to the first occupied grid 331 to be 1, wherein an initial position normalized value of each grid in the first grid plane map 33 before similarity matching is zero; and based on the at least one first projection position in each second grid of the second grid plane map 34, determining a second position normalized value corresponding to the second grid to be 1, wherein an initial position normalized value of each grid in the second grid plane map 34 before similarity matching is zero.

In this specific embodiment, the position normalization values of all occupied grids are set to be 1, and the position normalization values of unoccupied grids are set to be 0, thereby simplifying the process of calculating the average distribution position and improving the efficiency of detecting the slipping state.

Step S102a-1-2-2a-2, performing grid similarity matching based on the first position normalized value of each first occupied grid 331 in the first grid plane map 33 and the second position normalized value of each second occupied grid 341 in the second grid plane map 34 to obtain the similarity matching result.

This specific embodiment reduces the complexity of projection position matching, simplifies the amount of calculation, and improves the matching efficiency by uniquely characterizing the position features of all projection positions in the occupied grid through the position normalization value.

In some specific embodiments, said performing grid similarity matching based on the first position normalized value of each first occupied grid 331 in the first grid plane map 33 and the second position normalized value of each second occupied grid 341 in the second grid plane map 34 to obtain the similarity matching result comprises the following steps:
Step S102a-1-2-2a-2a-1: when traversing any first occupied grid 331 in the first grid plane map 33, a first calculation parameter value is increased by 1.

The first calculation parameter value is initially set to zero before traversal.

For example, as shown in FIG.4, the first grid plane map 33 includes 25 grids in total (5×5), of which 10 shaded grids are first occupied grids 331. When traversing the first occupied grids 331 in the first grid plane map 33, the first calculation parameter value is increased by 1 each time one first occupied grid 331 is visited, and the first calculation parameter value is 10 after traversal.

Step S102a-1-2-2a-2a-2, when the first position normalized value of said any first occupied grid 331 and the second position normalized value of the grid in the second grid plane map 34 corresponding to said any first occupied grid 331 meet the same preset condition, a second calculation parameter value is increased by 1.

The second calculation parameter value is initially set to zero before traversal.

The grid in the second grid plane map 34 corresponding to said any first occupied grid 331 refers to the grid at the same position in the preset grid plane. For example, as shown in FIG.4, the grid in the first arrangement position in the first grid plane map 33 is the first occupied grid 331, and the grid in the first arrangement position in the second grid plane map 34 (occupied grid) corresponds to the first occupied grid 331; the grid in the third arrangement position in the first grid plane map 33 is the first occupied grid 331, and the grid in the third arrangement position in the second grid plane map 34 (unoccupied grid) corresponds to the first occupied grid 331; and so on.

The preset same condition means that the distance or the absolute value of the difference between the first position normalized value and the second position normalized value is less than or equal to a preset difference threshold. For example, when the first position normalized values of all first occupied grids 331 and the second position normalized values of all second occupied grids 341 are both 1, the preset same condition means that the absolute value of the difference between the first position normalized value and the second position normalized value is equal to zero. When the first position normalized value and the second position normalized value of two grids at the same arrangement position in the first grid plane map 33 and the second grid plane map 34 are both 1, it indicates that the two grids are the same. When the first position normalized values of all first occupied grids 331 and the second position normalized values of all second occupied grids 341 are expressed as average distribution positions, the preset same condition means that the distance between the average distribution positions of two grids at the same arrangement position in the first grid plane map 33 and the second grid plane map 34 is less than or equal to the preset difference threshold, indicating that the two grids are the same.

If two grids at the same arrangement position in the first grid plane map 33 and the second grid plane map 34 are the same, the second calculation parameter value is increased by 1. For example, as shown in FIG.4, the second grid plane map 34 includes 5×5, 25 grids in total, which correspond to the first grid plane map 33, of which there are 7 second occupied grids 341. By comparison, the position normalization values of the grids in the first arrangement position, the fifth arrangement position, the tenth arrangement position, the fifteenth arrangement position and the twenty-first arrangement position in the first grid plane map 33 and the second grid plane map 34 meet the same preset condition, and therefore, the second calculation parameter value is 5.

Step S102a-1-2-2a-2a-3, after the traversal is completed, the quotient of the second calculation parameter value and the first calculation parameter value is calculated to obtain a first similarity matching result. For example, continuing the above example, after the traversal is completed, the second calculation parameter value is 5 and the first calculation parameter value is 10, then the first similarity matching result = 5/10 = 50%.

In some other specific embodiments, said performing grid similarity matching based on the first position normalized value of each first occupied grid 331 in the first grid plane map 33 and the second position normalized value of each second occupied grid 341 in the second grid plane map 34 to obtain the similarity matching result comprises the following steps:
Step S102a-1-2-2a-2b-1: when traversing any second occupied grid 341 in the second grid plane map 34, a third calculation parameter value is increased by 1.

The third calculation parameter value is initially set to zero before traversal.

For example, as shown in FIG. 4, the second grid plane map 34 includes 5×5, a total of 25 grids, of which there are 7 second occupied grids 341. When traversing the second occupied grids 341 in the second grid plane map 34, the third calculation parameter value is increased by 1 each time one second occupied grid 341 is visited, and the third calculation parameter value is 7 after traversal.

Step S102a-1-2-2a-2b-2, when the second position normalized value of said any second occupied grid 341 and the first position normalized value of the grid in the first grid plane map 33 corresponding to said any second occupied grid 341 meet the same preset condition, a fourth calculation parameter value is increased by 1.

The fourth calculation parameter value is initially set to zero before traversal.

The grid in the first grid plane map 33 corresponding to said any second occupied grid 341 refers to the grid in the same position in the preset grid plane.

If two grids in the same arrangement position in the first grid plane map 33 and the second grid plane map 34 are the same, the fourth calculation parameter value is increased by 1. For example, as shown in FIG.4, by comparison, the position normalization values of the grids in the first arrangement position, the fifth arrangement position, the tenth arrangement position, the fifteenth arrangement position and the twenty-first arrangement position in the first grid plane map 33 and the second grid plane map 34 meet the same preset condition, and therefore, the fourth calculation parameter value is 5.

Step S102a-1-2-2a-2b-3, after the traversal is completed, the quotient of the fourth calculation parameter value and the third calculation parameter value is calculated to obtain a second similarity matching result.

For example, continuing with the above example, after the traversal is completed, the fourth calculation parameter value is 5, and the third calculation parameter value is 7, then the second similarity matching result = 5/7 = 71.4%.

Step S102a-1-3, determining whether the position of the automatic cleaning apparatus has changed based on the similarity matching result.

In some specific embodiments, said determining whether the position of the automatic cleaning apparatus has changed based on the similarity matching result comprises the following steps:
Step S102a-1-3a: when the first similarity matching result and/or the second similarity matching result is greater than or equal to a preset proportion threshold, determining that the position of the automatic cleaning apparatus has not changed.

For example, continuing with the above example, in a case that the preset proportion threshold is 50%, when the first similarity matching result is 50%, it is equal to the preset proportion threshold. Therefore, it is determined that the position of the automatic cleaning apparatus has not changed.

For example, continuing with the above example, in a case that the preset percentage threshold is 50%, when the second similarity matching result is 71.4%, it is greater than the preset percentage threshold. Therefore, it is determined that the position of the automatic cleaning apparatus has not changed.

For example, continuing with the above example, in a case that the preset proportion threshold is 50%, when the first similarity matching result is 50%, which is equal to the preset proportion threshold, and the second similarity matching result is 71.4%, both the first similarity matching result and the second similarity matching result are greater than the preset proportion threshold. Therefore, it is determined that the position of the automatic cleaning apparatus has not changed.

When the first similarity match or the second similarity match is greater than or equal to the preset proportion threshold, it indicates that the first grid plane map 33 or the second grid plane map 34 may be similar. However, since the traversal is based on each first occupied grids 331 in the first grid plane map 33 as an access main line, and the existence of each second occupied grids 341 in the second grid plane map 34 is ignored, in order to ensure the accuracy of the similarity matching result, this specific embodiment provides using each second occupied grids 341 in the second grid plane map 34 as the access main line. When both the first similarity match and the second similarity match are greater than or equal to the preset proportion threshold, it is determined that the position of the automatic cleaning apparatus has not changed. The accuracy of the match is guaranteed.

In some other specific embodiments, said determining whether the position of the automatic cleaning apparatus has changed based on the similarity matching result comprises the following steps:
Step S102a-1-3b: when the first similarity matching result and/or the second similarity matching result is less than a preset proportion threshold, determining that the position of the automatic cleaning apparatus has changed.

For example, the preset proportion threshold is 50%. If the first similarity matching result is 45%, which is less than the preset proportion threshold of 50%, it is determined that the position of the automatic cleaning apparatus has changed.

For example, the preset proportion threshold is 50%. If the second similarity matching result is 48%, which is less than the preset proportion threshold of 50%, it is determined that the position of the automatic cleaning apparatus has changed.

For example, the preset proportion threshold is 50%. If the first similarity matching result is 45% and the second similarity matching result is 48%, both the first similarity matching result and the second similarity matching result are less than the preset proportion threshold of 50%, and thus it is determined that the position of the automatic cleaning apparatus has changed.

The present application allocates the point data of multiple frame point clouds to the first point cloud set or the second point cloud set respectively, and then projects the two-dimensional position of each point data in the first point cloud set and the second point cloud set to the preset grid plane to generate the first grid plane map 33 and the second grid plane map 34 respectively. Through the similarity matching result of the first grid plane map 33 and the second grid plane map 34, it is determined whether the position of the automatic cleaning apparatus has changed, and whether the automatic cleaning apparatus is in the slipping state. The processing process of map matching and positioning with complex two-dimensional electronic maps is avoided. In the process of grid similarity matching, the two-dimensional position of the point data in the frame point cloud is converted to the two-dimensional position in the occupied grid in the preset grid plane by gradient descent, and the two-dimensional position in the occupied grid is converted to the position normalized value of the occupied grid, which reduces the data processing amount and matching complexity and improves the matching efficiency.

Step S102a-2: when it is determined that the position of the automatic cleaning apparatus has not changed, it is determined that the automatic cleaning apparatus is in the slipping state.

In some other specific examples, said determining that the automatic cleaning apparatus is in the slipping state based on the metered distance value and the multiple frame point clouds comprises the following steps:
Step S102b-1, determining whether the position of the automatic cleaning apparatus has changed based on the multiple frame point clouds;
Step S102b- 2: when it is determined that the position of the automatic cleaning apparatus has not changed based on the multiple frame point clouds, determining whether the metered distance value is greater than a preset metered distance threshold;
Step S102b-3: when the metered distance value is greater than the preset metered distance threshold, it is determined that the automatic cleaning apparatus is in the slipping state.

The specific implementation method of the steps described in this specific embodiment is the same as that of the above embodiment, and will not be repeated again. Please refer to the above embodiment.

The disclosed embodiment obtains the metered distance value and multiple frame point clouds of the automatic cleaning apparatus within a preset detection time period during the walking of the automatic cleaning apparatus. By identifying the measured distance value, the active stop state of the automatic cleaning apparatus within the preset detection time period is excluded from the detection of the slipping state, thereby reducing the number of times the slipping state is detected and improving the perception efficiency of the system. When detecting the slipping state, the matching relationship between the point data of multiple frame point clouds is used to determine whether the position of the automatic cleaning apparatus has changed, and then determine whether the automatic cleaning apparatus is in the slipping state. The data processing volume and matching complexity are reduced, the matching efficiency is improved, the slipping state may be detected quickly and accurately, the detection sensitivity is improved, and the user experience is improved.

The present disclosure further provides an automatic cleaning apparatus embodiment that is consistent with the above-mentioned embodiment, which is used to implement steps of the method described in the above embodiment. The explanation based on the same name meaning is the same as that of the above embodiment, and has the same technical effect as the above embodiment, which will not be repeated here.

As shown in FIG.5, the present disclosure provides an automatic cleaning apparatus comprising a processor 130, an odometer 131 and a laser radar 132.

The odometer 131 is configured to obtain a metered distance value, wherein the metered distance value represents a rotation distance value of a driving wheel assembly.

The laser radar 132 is configured to obtain a frame point cloud during the walking of the automatic cleaning apparatus.

The processor 130 is connected respectively to the odometer 131 and the laser radar 132 for communication, and the processor 130 is configured to:
obtain the metered distance value through the odometer, and obtain multiple frame point clouds through the laser radar within a preset detection time period during the walking of the automatic cleaning apparatus, wherein the metered distance value represents the rotation distance value of the driving wheel assembly;
determine that the automatic cleaning apparatus is in the slipping state based on the metered distance value and the multiple frame point clouds.

Optionally, that the processor is configured to determine that the automatic cleaning apparatus is in the slipping state based on the metered distance value and the multiple frame point clouds, comprises:
when the metered distance value is greater than a preset metered distance threshold, determining whether the position of the automatic cleaning apparatus has changed based on the multiple frame point clouds;
when it is determined that the position of the automatic cleaning apparatus has not changed, determine that the automatic cleaning apparatus is in the slipping state.

Optionally, each frame point cloud includes multiple point data;
Accordingly, that the processor 130 is configured to determine whether the position of the automatic cleaning apparatus has changed based on the multiple frame point clouds, comprises:
allocating the multiple frame point clouds to a first point cloud set or a second point cloud set respectively, wherein the first point cloud set includes multiple first frame point clouds 31, and the second point cloud set includes multiple second frame point clouds 32;
performing similarity matching based on the multiple first frame point clouds 31 and the multiple second frame point clouds 32 to obtain a similarity matching result;
determining whether the position of the automatic cleaning apparatus has changed based on the similarity matching result.

Optionally, that the processor 130 is configured to perform similarity matching based on the multiple first frame point clouds 31 and the multiple second frame point clouds 32 to obtain a similarity matching result, comprises:
projecting a two-dimensional position of each point data in each first frame point cloud 31 onto a preset plane to obtain a first plane map, and projecting a two-dimensional position of each point data in each second frame point cloud 32 onto the preset plane to obtain a second plane map, wherein the first plane map includes multiple first projection positions, and the second plane map includes multiple second projection positions;
performing similarity matching based on the multiple first projection positions in the first plane map and the multiple second projection positions in the second plane map to obtain the similarity matching result.

Optionally, the preset plane includes a preset grid plane;
The first plane map includes a first grid plane map 33; the first grid plane map 33 includes multiple first occupied grids 331 among the multiple grids, and each first occupied grid 331 includes at least one first projection position.

The second plane map includes a second grid plane map 34; the second grid plane map 34 includes multiple second occupied grids 341 among the multiple grids, and each second occupied grid 341 includes at least one second projection position.

Accordingly, that the processor 130 is configured to perform similarity matching based on the multiple first projection positions in the first plane map and the multiple second projection positions in the second plane map to obtain the similarity matching result, comprises:
performing grid similarity matching based on the at least one first projection position in each first occupied grid 331 of the first grid plane map 33 and the at least one second projection position in each second occupied grid 341 of the second grid plane map 34 to obtain the similarity matching result.

Optionally, that the processor 130 is configured to perform grid similarity matching based on the at least one first projection position in each first occupied grid 331 of the first grid plane map 33 and the at least one second projection position in each second occupied grid 341 of the second grid plane map 34 to obtain the similarity matching result, comprises:
based on the at least one first projection position in each first occupied grid 331 of the first grid plane map 33, obtaining a first position normalized value corresponding to the first occupied grid 331, and based on the at least one second projection position in each second grid of the second grid plane map 34, obtaining a second position normalized value corresponding to the second grid;
performing grid similarity matching based on the first position normalized value of each first occupied grid 331 in the first grid plane map 33 and the second position normalized value of each second occupied grid 341 in the second grid plane map 34 to obtain the similarity matching result.

Optionally, that the processor 130 is configured to perform grid similarity matching based on the first position normalized value of each first occupied grid 331 in the first grid plane map 33 and the second position normalized value of each second occupied grid 341 in the second grid plane map 34 to obtain the similarity matching result, comprises:
when traversing any first occupied grid 331 in the first grid plane map 33, a first calculation parameter value is increased by 1;
when the first position normalized value of said any first occupied grid 331 and the second position normalized value of the grid in the second grid plane map 34 corresponding to said any first occupied grid 331 meet the same preset condition, a second calculation parameter value is increased by 1;
after the traversal is completed, the quotient of the second calculation parameter value and the first calculation parameter value is calculated to obtain a first similarity matching result.

Optionally, that the processor 130 is configured to perform grid similarity matching based on the first position normalized value of each first occupied grid 331 in the first grid plane map 33 and the second position normalized value of each second occupied grid 341 in the second grid plane map 34 to obtain the similarity matching result, comprises:
when traversing any second occupied grid 341 in the second grid plane map 34, a third calculation parameter value is increased by 1;
when the second position normalized value of said any second occupied grid 341 and the first position normalized value of the grid in the first grid plane map 33 corresponding to said any second occupied grid 341 meet the same preset condition, a fourth calculation parameter value is increased by 1;
after the traversal is completed, the quotient of the fourth calculation parameter value and the third calculation parameter value is calculated to obtain a second similarity matching result.

Optionally, that he processor 130 is configured to, based on the at least one first projection position in each first occupied grid 331 of the first grid plane map 33, obtain a first position normalized value corresponding to the first occupied grid 331, and based on the at least one second projection position in each second grid of the second grid plane map 34, obtain a second position normalized value corresponding to the second grid, comprises:
based on the at least one first projection position in each first occupied grid 331 of the first grid plane map 33, determining a first position normalized value corresponding to the first occupied grid 331 to be 1, wherein an initial position normalized value of each grid in the first grid plane map 33 is zero before similarity matching; and
based on the at least one first projection position in each second grid of the second grid plane map 34, determining a second position normalized value corresponding to the second grid to be 1, wherein an initial position normalized value of each grid in the second grid plane map 34 is zero before similarity matching.

Optionally, that the processor 130 is configured to allocate the multiple frame point clouds to a first point cloud set or a second point cloud set respectively, comprises:
dividing the preset detection time period into a first detection time period and a second detection time period;
allocating the multiple frame point clouds within the first detection time period respectively to the first point cloud set, and allocating the multiple frame point clouds within the second detection time period respectively to the second point cloud set.

Optionally, that the processor 130 is configured to determine whether the position of the automatic cleaning apparatus has changed based on the similarity matching result, comprises:
when the first similarity matching result and/or the second similarity matching result is greater than or equal to a preset proportion threshold, determining that the position of the automatic cleaning apparatus has not changed.

Optionally, that the processor 130 is further configured to determine whether the position of the automatic cleaning apparatus has changed based on the similarity matching result, comprises:
when the first similarity matching result and/or the second similarity matching result is less than a preset proportion threshold, determining that the position of the automatic cleaning apparatus has changed.

Optionally, that the processor 130 is configured to determine that the automatic cleaning apparatus is in the slipping state based on the metered distance value and the multiple frame point clouds, comprises:
determining whether the position of the automatic cleaning apparatus has changed based on the multiple frame point clouds;
when it is determined that the position of the automatic cleaning apparatus has not changed based on the multiple frame point clouds, determining whether the metered distance value is greater than a preset metered distance threshold;
when the metered distance value is greater than the preset metered distance threshold, determining that the automatic cleaning apparatus is in the slipping state.

The disclosed embodiment obtains the metered distance value and multiple frame point clouds of the automatic cleaning apparatus within a preset detection time period during the walking of the automatic cleaning apparatus. By identifying the metered distance value, the active stop state of the automatic cleaning apparatus within the preset detection time period is excluded from the detection of the slipping state, thereby reducing the number of times the slipping state is detected and improving the perception efficiency of the system. When detecting the slipping state, the matching relationship between the point data of multiple frame point clouds is used to determine whether the position of the automatic cleaning apparatus has changed, and then determine that the automatic cleaning apparatus is in the slipping state. The data processing volume and matching complexity are reduced, the matching efficiency is improved, the slipping state can be detected quickly and accurately, the detection sensitivity is improved, and the user experience is improved.

An embodiment of the present disclosure provides a non-transitory computer-readable storage medium storing computer program instructions, wherein the computer program instructions, when called and executed by a processor, implement steps of the method of any of the above embodiments.

An embodiment of the present disclosure provides an automatic cleaning apparatus comprising a processor and a memory, wherein the memory stores computer program instructions that may be executed by the processor, and when the processor executes the computer program instructions, steps of the method of any of the above embodiments are implemented.

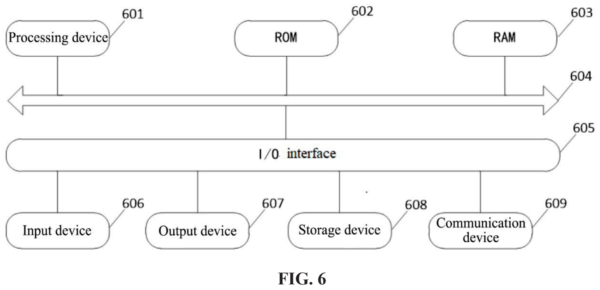

As shown in FIG.6, the automatic cleaning apparatus may include a processing device (e.g., a central processing unit, a graphics processing unit, etc.) 601, which can perform various appropriate actions and processes according to a program stored in a read-only memory (ROM) 602 or a program loaded from a storage device 608 to a random access memory (RAM) 603. Various programs and data required for the operation of the automatic cleaning apparatus are further stored in the RAM 603. The processing device 601, the ROM 602, and the RAM 603 are connected to each other via a bus 604. An input/output (I/O) interface 605 is also connected to the bus 604.

Typically, the following devices may be connected to the I/O interface 605: an input device 606 including, for example, a touch screen, a touchpad, a keyboard, a mouse, a camera, a microphone, an accelerometer, a gyroscope, etc.; an output device 607 including, for example, a liquid crystal display (LCD), a speaker, a vibrator, etc.; a storage device 608 including, for example, a hard disk, etc.; and a communication device 609. The communication device 609 may allow the electronic apparatus to communicate with other apparatuses wirelessly or by wire to exchange data. Although FIG.6 shows an electronic apparatus with various devices, it should be understood that it is not required to implement or have all the devices shown. More or fewer devices may be implemented or contained alternatively.

The flow chart and block diagram in the accompanying drawings illustrate the possible architecture, function and operation of the system, method and computer program product according to various embodiments of the present disclosure. In this regard, each block in the flow chart or block diagram may represent a module, a program segment or a part of a code that contains one or more executable instructions for realizing the specified logical function. It should also be noted that in some alternative implementations, the functions marked in the block may also occur in a different order other than that marked in the accompanying drawings. For example, two blocks represented in succession may actually be executed substantially in parallel, and they may sometimes be executed in the opposite order, depending on the functions involved. It should also be noted that each block in the block diagram and/or flow chart, and the combination of the blocks in the block diagram and/or flow chart may be implemented with a dedicated hardware-based system that performs a specified function or operation, or may be implemented with a combination of dedicated hardware and computer instructions.

Finally, it should be noted that the various embodiments in this specification are described in a progressive manner, and each embodiment focuses on the differences from other embodiments. The same or similar parts between the various embodiments may be referred to each other. For the system or apparatus disclosed in the embodiment, since it corresponds to the method disclosed in the embodiment, the description is relatively simple, and the relevant parts may be referred to the method part description.

The above embodiments are only used for illustrating the technical solutions of the present disclosure and are not intended to limit the present disclosure. Although the present disclosure has been described in detail with reference to the foregoing embodiments, those of ordinary skills in the art should understand that, they may still make modifications to the technical solutions described in the foregoing embodiments or make equivalent substitutions to part of the technical features; and these modifications or substitutions do not make the essence of the corresponding technical solutions deviate from the spirit and scope of the technical solutions of the various embodiments of the present disclosure.

## Claims

1. A method for detecting a slipping state, comprising:
obtaining a metered distance value through an odometer, and obtaining multiple frame point clouds through a laser radar within a preset detection time period during walking of an automatic cleaning apparatus, wherein the metered distance value represents a rotation distance value of a driving wheel assembly; and
determining that the automatic cleaning apparatus is in the slipping state based on the metered distance value and the multiple frame point clouds.

2. The method according to claim 1, wherein said determining that the automatic cleaning apparatus is in the slipping state based on the metered distance value and the multiple frame point clouds comprises:
when the metered distance value is greater than a preset metered distance threshold, determining whether the position of the automatic cleaning apparatus has changed based on the multiple frame point clouds; and
when it is determined that the position of the automatic cleaning apparatus has not changed, determining that the automatic cleaning apparatus is in the slipping state.

3. The method according to claim 1, wherein said determining that the automatic cleaning apparatus is in the slipping state based on the metered distance value and the multiple frame point clouds comprises the following steps:
determining whether the position of the automatic cleaning apparatus has changed based on the multiple frame point clouds;
when it is determined that the position of the automatic cleaning apparatus has not changed based on the multiple frame point clouds, determining whether the metered distance value is greater than a preset metered distance threshold; and
when the metered distance value is greater than the preset metered distance threshold, determining that the automatic cleaning apparatus is in the slipping state.

4. The method according to claim 2 or 3, wherein:
each frame point cloud includes multiple point data;
said determining whether the position of the automatic cleaning apparatus has changed based on the multiple frame point clouds comprises:
allocating the multiple frame point clouds to a first point cloud set or a second point cloud set respectively, wherein the first point cloud set includes multiple first frame point clouds, and the second point cloud set includes multiple second frame point clouds;
performing similarity matching based on the multiple first frame point clouds and the multiple second frame point clouds to obtain a similarity matching result; and
determining whether the position of the automatic cleaning apparatus has changed based on the similarity matching result.

5. The method according to claim 4, wherein said allocating the multiple frame point clouds to a first point cloud set or a second point cloud set respectively comprises:
dividing the preset detection time period into a first detection time period and a second detection time period; and
allocating the multiple frame point clouds within the first detection time period respectively to the first point cloud set, and allocating the multiple frame point clouds within the second detection time period respectively to the second point cloud set.

6. The method according to claim 4, wherein said performing similarity matching based on the multiple first frame point clouds and the multiple second frame point clouds to obtain a similarity matching result comprises:
projecting a two-dimensional position of each point data in each first frame point cloud onto a preset plane to obtain a first plane map, and projecting a two-dimensional position of each point data in each second frame point cloud onto the preset plane to obtain a second plane map, wherein the first plane map includes multiple first projection positions, and the second plane map includes multiple second projection positions; and
performing similarity matching based on the multiple first projection positions in the first plane map and the multiple second projection positions in the second plane map to obtain the similarity matching result.

7. The method according to claim 6, wherein:
the preset plane includes a preset grid plane;
the first plane map includes a first grid plane map, the first grid plane map includes multiple first occupied grids among the multiple grids, and each first occupied grid includes at least one first projection position;
the second plane map includes a second grid plane map, the second grid plane map includes multiple second occupied grids among the multiple grids, and each second occupied grid includes at least one second projection position;
said performing similarity matching based on the multiple first projection positions in the first plane map and the multiple second projection positions in the second plane map to obtain the similarity matching result comprises:
performing grid similarity matching based on the at least one first projection position in each first occupied grid of the first grid plane map and the at least one second projection position in each second occupied grid of the second grid plane map to obtain the similarity matching result.

8. The method according to claim 7, wherein said performing grid similarity matching based on the at least one first projection position in each first occupied grid of the first grid plane map and the at least one second projection position in each second occupied grid of the second grid plane map to obtain the similarity matching result comprises:
based on the at least one first projection position in each first occupied grid of the first grid plane map, obtaining a first position normalized value corresponding to the first occupied grid, and based on the at least one second projection position in each second occupied grid of the second grid plane map, obtaining a second position normalized value corresponding to the second occupied grid; and
performing grid similarity matching based on the first position normalized value of each first occupied grid in the first grid plane map and the second position normalized value of each second occupied grid in the second grid plane map to obtain the similarity matching result.

9. The method according to claim 8, wherein said performing grid similarity matching based on the first position normalized value of each first occupied grid in the first grid plane map and the second position normalized value of each second occupied grid in the second grid plane map to obtain the similarity matching result comprises:
when traversing any first occupied grid in the first grid plane map, increasing a first calculation parameter value by 1;
when the first position normalized value of said any first occupied grid and the second position normalized value of the grid in the second grid plane map corresponding to said any first occupied grid meet the same preset condition, increasing a second calculation parameter value by 1; and
after the traversal is completed, calculating a quotient of the second calculation parameter value and the first calculation parameter value to obtain a first similarity matching result.

10. The method according to claim 9, wherein said performing grid similarity matching based on the first position normalized value of each first occupied grid in the first grid plane map and the second position normalized value of each second occupied grid in the second grid plane map to obtain the similarity matching result comprises:
when traversing any second occupied grid in the second grid plane map, increasing a third calculation parameter value by 1;
when the second position normalized value of said any second occupied grid and the first position normalized value of the grid in the first grid plane map corresponding to said any second occupied grid meet the same preset condition, increasing a fourth calculation parameter value by 1; and
after the traversal is completed, calculating a quotient of the fourth calculation parameter value and the third calculation parameter value to obtain a second similarity matching result.

11. The method according to claim 8, wherein said based on the at least one first projection position in each first occupied grid of the first grid plane map, obtaining a first position normalized value corresponding to the first occupied grid, and based on the at least one second projection position in each second occupied grid of the second grid plane map, obtaining a second position normalized value corresponding to the second occupied grid comprises:
based on the at least one first projection position in each first occupied grid of the first grid plane map, determining a first position normalized value corresponding to the first occupied grid to be 1, wherein an initial position normalized value of each grid in the first grid plane map is zero before similarity matching; and
based on the at least one first projection position in each second occupied grid of the second grid plane map, determining a second position normalized value corresponding to the second occupied grid to be 1, wherein an initial position normalized value of each grid in the second grid plane map is zero before similarity matching.

12. The method according to claim 10, wherein said determining whether the position of the automatic cleaning apparatus has changed based on the similarity matching result comprises:
when the first similarity matching result and/or the second similarity matching result is greater than or equal to a preset proportion threshold, determining that the position of the automatic cleaning apparatus has not changed.

13. The method according to claim 10, wherein said determining whether the position of the automatic cleaning apparatus has changed based on the similarity matching result comprises:
when the first similarity matching result and/or the second similarity matching result is less than a preset proportion threshold, determining that the position of the automatic cleaning apparatus has changed.

14. An automatic cleaning apparatus, comprising:
an odometer configured to obtain a metered distance value, wherein the metered distance value represents a rotation distance value of a driving wheel assembly;
a laser radar configured to obtain a frame point cloud during the walking of the automatic cleaning apparatus;
a processor connected respectively to the odometer and the laser radar for communication, and the processor configured to:
obtain the metered distance value through the odometer, and obtain multiple frame point clouds through the laser radar within a preset detection time period during the walking of the automatic cleaning apparatus, wherein the metered distance value represents the rotation distance value of the driving wheel assembly; and
determine that the automatic cleaning apparatus is in the slipping state based on the metered distance value and the multiple frame point clouds.

15. An automatic cleaning apparatus, comprising a processor and a memory, wherein the memory stores computer program instructions executable by the processor, and when the processor executes the computer program instructions, steps of the method according to any one of claims 1 to 13 are implemented.

16. A non-transitory computer-readable storage medium storing computer program instructions, wherein the computer program instructions, when called and executed by a processor, implement steps of the method of any one of claims 1 to 13.
